# EUROPEAN PATENT APPLICATION

(11) **EP 3 666 815 A1**
(43) Date of publication of application: **17.06.2020**
(21) Application number: 18845041.5
(22) Date of filing: 01.08.2018
(51) Int. Cl.: C08J 3/28, C08L 27/18

(54) **PROCESS FOR PRODUCING POLYMER MATERIALS**

(30) Priority: 09.08.2017 RU 2017128425
(71) Applicant: LIMITED LIABILITY COMPANY «QUANTUM R», Moscow, 143026 (RU)
(72) Inventor: ARSENTYEV, Mikhail Aleksandrovich, Almaty Auezovsky r-n 050042 (KZ); SLESARENKO, Sergey Vitalyevich, Almaty Auezovsky r-n 050042 (RU)
(74) Representative: Berggren Oy, Helsinki & Oulu
(86) International application number: PCT/RU2018/000513
(87) International publication number: WO 2019/031988

(57) **Abstract**

This invention relates to the radiation chemistry and high-energy chemistry technologies for the production, by heat-and-radiation treatment of workpieces, of enhanced-performance polymer materials, in particular, of polytetrafluoroethylene (PTFE) and other sorts of fluoroplastics used in various industries. Specifically, it relates to treating workpieces by high-energy ionizing radiation at a temperature strictly higher than the polymer crystalline phase melting point in an anoxic environment. The treatment is done via a pulsed linear electron accelerator generating ionizing radiation until an absorbed dose of 0-500 kGy is achieved. During the irradiation process, the polymer temperature is reduced by not more than 0.5°C/10 kGy, and subsequent to the ionizing radiation treatment, the polymer is heat treated. Alpha radiation, gamma radiation, electron radiation, irradiation with high-energy protons and neutrons, radiation from natural sources are used for the treatment. By this treatment method, physical and mechanical properties of the material are improved and consistency and programmability of the physical and mechanical characteristics are provided. 7 subclaims

## Description

This invention relates to the radiation chemistry and high-energy chemistry technologies for the production, by heat-and-radiation treatment of workpieces, of enhanced-performance polymer materials, in particular, of polytetrafluoroethylene (PTFE) and other sorts of fluoroplastics widely used in various industries, such as automotive, aircraft, medical, space, chemical and other industries.

As is known (ref. to Istomin, N.P., Semyonov, A.P., Antifriktsionnye svoistva kompositsionnykh materialov na osnove ftorpolimerov (Antifriction Properties of Fluoropolymer-Based Composite Materials)*).* Moscow, 1981, effect from ionizing radiation on the polytetrafluoroethylene in air at a room temperature may improve its wear resistance. Following polytetrafluoroethylene irradiation with gamma quanta, the amount of volumetric and mass wear at the loads of 350 and 400 N and the rubbing speed of 0.5 and 0.01 m/s was observed to decrease by approximately 20 times. The relationship between the polytetrafluoroethylene wear resistance and the absorbed dose amount was of the form of a peaked curve. The absorbed dose at which the maximum improvement in tribotechnical characteristics was achieved was 50 Mrad. Further increase in the absorbed dose resulted in the wear increasing to such an extent that embrittlement of the samples occurred and it was impossible to measure the wear parameters on them at 100 Mrad. It should be noted that the radiolytic process prevailing in polytetrafluoroethylene in an air environment (oxygen assisted) is the breakdown of polymer chains (Fluoropolymers. / Eds. L. Wall: Translated from English / Eds. I.L. Knunyants and V.A. Ponomarenko. - Moscow: Mir, 1975). As such, polytetrafluoroethylene irradiation under the above conditions, though increasing its wear resistance, results in significant degradation of its other mechanical characteristics (breaking strength, yield strength, etc.) and, therefore, is inacceptable in practice. Furthermore, the PTFE wear resistance increase by ten folds resulting from radiation treatment in the above conditions cannot be considered high enough, since the state-of-the-art methods, wherein antifriction compositions are produced on the basis thereof using metal oxides, provide an increase in the wear resistance by 100-1000 times (Istomin, N.P., Semyonov, A.P., Antifriktsionnye svoistva kompositsionnykh materialov na osnove ftorpolimerov (Antifriction Properties of Fluoropolymer-Based Composite Materials). - Moscow, 1981)).

A method for heat-and-radiation treatment of polytetrafluoroethylene-based products in an inert atmosphere to produce sealing devices is known from USSR Inventor's Certificate No. 1642730 A1, C08J 3/28, 1999. To increase the sealing devices' service life, PTFE-based products were irradiated at an elevated temperature of 50 to 55°C in an inert atmosphere until an absorbed dose of 0.8 Mrad was achieved. As a result of the heat-and-radiation treatment, the sealing devices' service life was increased by ten folds while preserving PTFE's other physical and mechanical characteristics.

A method for heat-and-radiation treatment of polytetrafluoroethylene-based products is known from RF Patent No. 2597913, Class C08J 3/28, published 20.09.2016 (assumed as the closest analog), wherein workpieces are irradiated with gamma quanta at an elevated temperature, in a melt, in an inert atmosphere. Therein, the workpiece temperature is maintained below the polytetrafluoroethylene melting point, but above its crystallization temperature. The workpieces are irradiated using a pulsed linear accelerator operating in the gamma mode and a converter until an absorbed dose of 50-350 kGy is achieved, the workpiece temperature being reduced by 0.8 to 1°C per 10 kGy during the irradiation process and the irradiation rate exceeding 10 Gy/s. Following irradiation, the workpieces are cooled to a room temperature at the rate of 30 to 70°C/h. The invention provides for a reduction in the product irradiation duration and for an increase in the ionizing radiation effective volume utilization factor.

One disadvantage of the above approach is the variability of the polymer's physical and mechanical characteristics in the course of irradiation; specifically, under said conditions of heat-and-radiation treatment ("...the workpiece temperature is maintained below the polytetrafluoroethylene melting point, but above its crystallization temperature...", which corresponds to temperatures =<327°C), degradation of polymer areas may occur due to the presence of hard crystalline areas prone to severe degradation when irradiated. In addition to the heat-and-radiation caused degradation, such variability of properties may also be attributed to incorrect cooling conditions (rate and duration).

The technical result to be obtained by the claimed invention is to improve the fluoropolymer material's physical and mechanical properties while providing for their consistency and programmability in the course of producing a finished product.

Said technical result is achieved by the claimed method comprising workpiece treatment by various types of high-energy ionizing radiation (alpha radiation, electron radiation, irradiation with protons, neutrons and other ionizing particles, braking gamma radiation and gamma radiation) at a temperature strictly higher than the polymer crystalline phase melting point in an anoxic (inert) environment, the polytetrafluoroethylene being treated via a pulsed linear electron accelerator generating a braking gamma radiation until achieving an absorbed dose of 0-500 kGy or an energetically equivalent coherent high energy radiation is achieved, wherein, to achieve specific physical and mechanical characteristics (wear resistance, hardness, elasticity), the polymer temperature is reduced by not more than 0.5 degrees/10 kGy in the course of irradiation, and, to adjust the polymer hardness to elasticity ratio, subsequent to the high-energy ionizing radiation treatment, the polymer is heat treated (heating/cooling) to normalize its properties and to achieve maximum uniformity of the material and programmability of its physical and mechanical characteristics.

It should be noted that, as a result of ionizing radiation treatment, radiation effects are produced in fluoroplastics due the occurrence of a radiochemical reaction. This effect occurs and increases with increasing absorbed energy of ionizing radiation (absorbed dose of such radiation) per unit volume. A radiochemical reaction may be quantitatively characterized by the radiation chemical yield (i.e. the amount of change in the workpiece physical and mechanical properties resulting from absorption of 100 eV of ionizing radiation). Ionizing radiation qualitative characteristic, i.e. ionizing radiation efficiency, depends on the radiation type, specifically, on the linear energy transfer amount.

Thus, to achieve the maximum radiation effect in terms of quantity, the most effective ionizing radiation is to be selected. Such radiation is the gamma radiation (either natural, or man-made, i.e. braking) having the largest linear energy transfer amount and, therefore, uniformity of the radiation effect amount in the workpiece volume. The most preferable source of gamma radiation is a pulsed linear accelerator.

The claimed method is implemented via a machine comprised primarily of a horizontal pulsed linear accelerator (PLA) and a radiant heat chamber (RHC).

The step-by-step implementation of the claimed heat-and-radiation treatment method:
A polymer material is prepared in accordance with standard technical specifications for fluoropolymer material processing (extrusion, casting, sinter molding).

The resulting polymer material workpieces are then delivered to a preparation area and placed into the RHC. In the RHC, oxygen is pumped out until a residual pressure is reached, and then the chamber is filled with inert gas (argon, nitrogen) until a gauge pressure is reached.

In the RHC, the polymer material workpieces are heated to a temperature above the crystalline phase melting point from 327°C and not higher than 380°C at a rate of 60°C/h or lower and subjected to thermostating at a temperature substantially higher than the crystalline phase melting point (but not higher than 380°C), thus making it possible to carry out a complete polymer crystalline phase melting process, while preventing potential degradation of polymer areas due to a presence of hard crystalline areas prone to severe degradation when irradiated.

At the next step, the workpieces are delivered to an irradiation area. Specifically, the polymer material workpieces are treated by ionizing braking gamma radiation from the pulsed linear accelerator at a rate of 0-1000 Gy/s. The irradiation is continued until an absorbed dose of 0.5-500 kGy (or energetically equivalent coherent high energy radiation) is achieved, while reducing the product temperature in the course of treatment by not more than 0.5 degrees/10 kGy. After the irradiation is terminated, due to potential rapid accumulation of the necessary irradiation dose and the specifics of the polymer material workpieces' structure and, therefore, physical and mechanical characteristics, changing mechanism, additional heat treatment in the heating/cooling mode is to be done at temperatures ranging from the treated polymer crystallization onset temperature to 380°C/h to normalize and stabilize its properties.

At the final treatment step, the treated polymer material workpieces are cooled to a room temperature at a rate not higher than 60°C/h.

Workpieces may also be treated with radiation other than the above braking gamma radiation, i.e. by alpha radiation, gamma radiation, electron radiation, high-energy protons and neutrons, radiation from natural sources.

The invention provides substantial improvement in the quality of resulting polymers with various sets of properties as required for various applications.

## Claims

1. A method for heat-and-radiation treatment of fluoroplastic-based products, in particular, of polytetrafluoroethylene-based products, wherein workpieces are treated by high-energy ionizing radiation at a temperature strictly higher than the polymer crystalline phase melting point in an anoxic environment, the polymer being treated via a pulsed linear electron accelerator generating ionizing radiation until an absorbed dose of 0.5 to 500 kGy is achieved, wherein the polymer temperature is reduced by not more than 0.5°C/10 kGy in the course of irradiation, and subsequent to the ionizing radiation treatment, the polymer is heat treated.

2. The method of Claim 1, **characterized in that** alpha radiation is used as the high-energy ionizing radiation.

3. The method of Claim 1, **characterized in that** gamma radiation is used as the high-energy ionizing radiation.

4. The method of Claim 1, **characterized in that** electron radiation is used as the high-energy ionizing radiation.

5. The method of Claim 1, **characterized in that** irradiation with high-energy protons and neutrons is used as the high-energy ionizing radiation.

6. The method of Claim 1, **characterized in that** radiation from natural sources is used as the high-energy ionizing radiation.

7. The method of Claim 1, **characterized in that** the workpiece is treated at a temperature above 327°, but not higher than 380°C.

8. The method of Claim 1, **characterized in that** after the irradiation is terminated, additional heat treatment of the workpiece in the heating/cooling mode is done at temperatures ranging from the treated polymer crystallization onset temperature to 380°C/h.
